(19) Europäisches Patentamt
European Patent Office
Office européen des brevets

(11) **EP 4 481 694 A1**

(12) **EUROPEAN PATENT APPLICATION**

(43) Date of publication:
**25.12.2024  Bulletin 2024/52**

(21) Application number: **24178802.5**

(22) Date of filing: **29.05.2024**

(51) International Patent Classification (IPC):
**G06V 10/75** (2022.01)      **G06T 7/73** (2017.01)
**G06V 10/82** (2022.01)      **G06V 20/13** (2022.01)
**G06V 20/56** (2022.01)

(52) Cooperative Patent Classification (CPC):
**G06V 10/82; G06T 7/74; G06V 10/75; G06V 20/13; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.06.2023  IN 202311042129**
**21.09.2023  US 202318471807**

(71) Applicant: **Honeywell International Inc.**
**Charlotte, NC 28202 (US)**

(72) Inventors:
• **TSAI, Jack**
  **Charlotte, 28202 (US)**
• **FISHER, Zachary**
  **Charlotte, 28202 (US)**
• **VENKATARAMAN, Vijay**
  **Charlotte, 28202 (US)**
• **GUPTA, Nikhil**
  **Charlotte, 28202 (US)**

(74) Representative: **Haseltine Lake Kempner LLP**
**Cheapside House**
**138 Cheapside**
**London EC2V 6BJ (GB)**

(54) **VISION-ONLY POSE RELOCALIZATION**

(57)      Systems and methods for vision-only pose re-localization include an image acquisition device on an object that acquires a query frame of an environment containing the object; and a memory device that stores an image database. Further, the system can also include a processor that executes computer-readable instructions that direct the processor to perform a coarse-matching algorithm to identify a set of coarsely matched frames of data stored in the image database that coarsely match the query frame; perform a fine-matching algorithm to identify a candidate image in the set of coarsely matched frames that match the query frame; designate the candidate image as a matching image based on whether the candidate image satisfies a validity check; and perform a pose-solving algorithm based on the acquired query frame, the matching image, and parameters for the image acquisition device to estimate a pose of the object in six degrees of freedom.

FIG. 3

EP 4 481 694 A1

**Description**

CROSS-REFERENCE TO RELATED APPLICATIONS

This application claims the benefit of and priority to United States Patent Application No. 18/471,807, filed on September 21, 2023, titled "Vision-Only Pose Relocalization," which claims the benefit of and priority to Indian Patent Application No. 202311042129, filed on June 23, 2023, titled "Vision-Only Pose Relocalization," both of which are incorporated herein by reference in their entireties.

BACKGROUND

Many vehicles are built with navigation systems that attempt to determine the position and attitude of the vehicle. Typically, navigation systems acquire information about the position and attitude of a vehicle from one or more sensors or receivers mounted to the vehicle. The navigation system receives navigational data about the vehicle's position or environment that the navigation system uses to determine the position and attitude of the vehicle. For example, a navigation system may include inertial sensors and global navigation satellite system receivers, among other sensors that all provide or receive information. Further, some sensors used by a navigation system may be image sensors.

SUMMARY

Systems and methods for vision-only pose relocalization include an image acquisition device mounted to an object, the image acquisition device configured to acquire a query frame of an environment containing the object. The system can also include a memory device configured to store an image database. Further, the system can also include at least one processor configured to execute computer-readable instructions that direct the at least one processor to perform a coarse-matching algorithm to identify a set of coarsely matched frames of data stored in the image database that coarsely match the query frame. Additionally, the computer-readable instructions direct the at least one processor to perform a fine-matching algorithm to identify a candidate image in the set of coarsely matched frames that match the query frame. Also, the computer-readable instructions direct the at least one processor to designate the candidate image as a matching image based on whether the candidate image satisfies a validity check. Moreover, the computer-readable instructions direct the at least one processor to perform a pose-solving algorithm based on the acquired query frame, the matching image, and parameters for the image acquisition device to estimate a pose of the object in six degrees of freedom.

BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:

FIG. 1 is a block diagram illustrating a system for performing vision-only pose relocalization according to an aspect of the present disclosure;

FIG. 2 is a block diagram illustrating a system for preparing data for storage in an image database according to an aspect of the present disclosure;

FIG. 3 is a flowchart diagram illustrating a method for performing vision-only pose relocalization according to an aspect of the present disclosure;

FIG. 4 is a block diagram illustrating the identification of a set of coarse-matching images according to an aspect of the present disclosure;

FIG. 5 is a block diagram illustrating the identification of a set of fine-matching images according to an aspect of the present disclosure;

FIGs. 6A and 6B are diagrams illustrating the application of a homography matrix when performing a validity check according to an aspect of the present disclosure; and

FIG. 7 is a flowchart diagram illustrating a method for performing vision-only pose relocalization according to an aspect of the present disclosure.

Per common practice, the drawings do not show the various described features according to scale, but the drawings show the features to emphasize the relevance of the features to the example embodiments.

DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems and methods for vision-only pose relocalization are described herein. For example, a navigation system attached to an object includes an image acquisition device that acquires a query frame representation of the environment. Further, the navigation system may include a database of images, where a candidate image in the database may represent the environment represented in the acquired query frame. With the database of images and the acquired query frame, the navigation system may perform a series of algorithms to identify a candidate-matching image (matching candidate) that describes the same environment represented by the information in the acquired query frame. In particular, the navigation system performs a coarse-matching algorithm to identify a set of coarsely matched candidates in the database of images. When the navigation system has identified the coarsely matched candidates, the navigation system performs a fine-matching algorithm to identify one or more finely matched candidates. From the finely matched candidates, the navigation system identifies a matching candidate that satisfies a validity check. After identifying the matching image, the navigation system performs a pose-solving algorithm using the acquired query frame, the identified matching candidate, and the image acquisition device parameters. The pose-solving algorithm may allow the navigation system to determine the position of the object in six degrees of freedom using data acquired from the image acquisition device.

A vision-only pose relocalization system, as described herein, can provide solutions to the problem known as the lost robot problem. The lost robot problem typically refers to a robot losing its position or becoming disoriented in an environment. As vehicles (and objects like robots) are increasingly autonomous, navigation systems are needed to help keep a vehicle properly oriented within an environment. One source of information that can provide localization information in all six degrees of freedom is image data. In particular, navigation systems acquire image data from the present environment and compare the acquired image data to stored image data representing known locations to determine navigation information. As such, a navigation system may acquire image information and determine its pose in six degrees of freedom (latitude, longitude, altitude, yaw, pitch, and roll) without using information acquired from global navigation satellite systems, inertial sensors, or other sources of navigation information. Further, the determined pose may be used as an input to help improve the accuracy of navigation solutions based on the fusion of information from multiple sensors.

In certain embodiments, a navigation system may perform a re-localization technique called landmark navigation that uses computer vision to determine the pose of any object attached to the navigation system. As stated, the navigation system may have access to a database of images, where each image describes a particular region. As part of providing the database of images to the navigation system, raw image data may be prepared to facilitate the comparison of the stored images against acquired query frames. For example, the raw image data may include satellite or other image data (i.e., lidar) that may be acquired offline or independently of the vehicle operation. For example, when using satellite image data, data representing a region through which an aircraft may be flying may be acquired. A processor (such as a server) or multiple processors (such as those employed in massive parallel processing) may preprocess the database of images using multi-scaling and overlapping of the raw image data, where the raw image data is provided as an input to one or more machine-learning models. The machine-learning model may provide different descriptors for the different images in the image database. The descriptors may then be associated with an image and saved with the image in a database of images. The database is then stored within a memory device accessible to the navigation system during operation.

In further embodiments, the machine learning models may produce different sets of descriptors for each image in the database of images where each set of descriptors facilitates comparison using a different comparative algorithm. For example, a first machine learning model may produce a set of coarse descriptors for each image that facilitates a quick comparison of a database image with the query frame acquired by the navigation system. Also, a second machine learning model may produce a set of fine descriptors for each image that facilitates a detailed comparison of a database image with the query frame acquired by the navigation system. For example, a coarse descriptor may be a global descriptor for an image, and fine descriptors may be local descriptors of key points within an image.

In exemplary embodiments, upon acquiring a query frame, the navigation system may use a machine learning model or other algorithm to calculate a global descriptor for the query frame. The navigation system may perform a coarse comparison that identifies a number of images in the database having global descriptors that are closest to the global descriptor for the query frame. For example, the navigation system may identify the N images in the database having the closest global descriptors. After identifying the N images, the navigation system may use a machine learning model or other algorithm to calculate a fine descriptor for the query frame. For example, the machine learning model may identify key points in the query frame. After identifying the fine descriptor for the query frame, the navigation system may compare the fine descriptors found in the query frame with the previously calculated fine descriptors associated with the closest images identified during the coarse comparison, where the navigation system identifies a candidate image having the fine descriptor that best matches the fine descriptor for the query frame.

In some embodiments, when the navigation system has identified the candidate image, the navigation system may perform a validity check for the candidate image. In particular, the navigation system may use the information from the fine matching to calculate a homography matrix that maps the footprint of the query frame onto the candidate image. After mapping the footprint onto the candidate image, the navigation system applies the homography matrix to points identified in the query frame and verifies that the homography matrix maps the identified points to a location within the footprint mapped on the candidate image. If the identified points fall outside of the footprint, the navigation system selects a new candidate image having the next best match to the fine descriptors of the query frame and repeats the homography matrix validity check.

In certain embodiments, when a candidate image passes the validity check, the navigation system may designate the candidate image as a matching image. The navigation system uses the matching image to calculate the pose of the object associated with the navigation system in up to six degrees of freedom. For example, the navigation system may store parameters for the image acquisition device that describe the relationship between the position of the image acquisition device and images acquired by the image acquisition device to the object. Using the stored parameters and information describing matching points identified in the query frame and the candidate image, the navigation system may calculate the pose of the object in six degrees of freedom. For example, the navigation system may use the data as input for a perspective N point (PNP) algorithm that calculates the position (i.e., latitude, longitude, altitude) and attitude (i.e., roll, pitch, yaw) of the object. Accordingly, the systems and methods described herein solve the lost robot problem and provide a navigation aid using the data acquired by an image acquisition device.

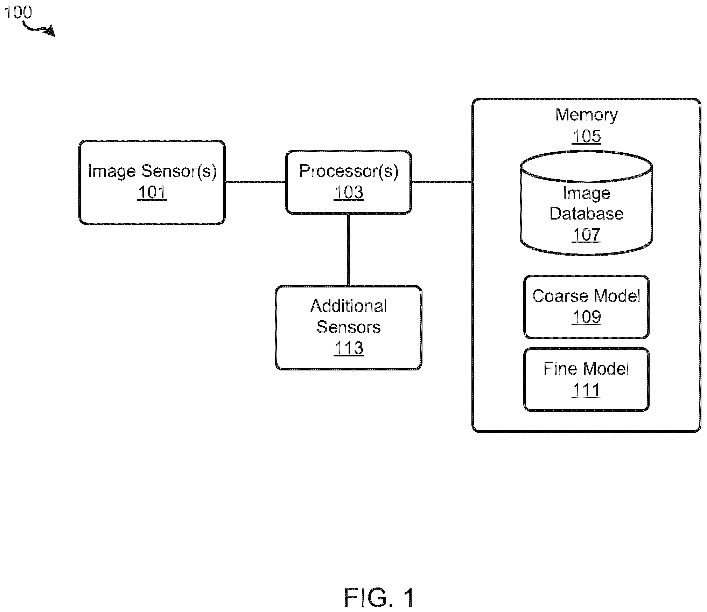

FIG. 1 is a block diagram illustrating a potential navigation system 100 that can provide pose relocalization using vision data. For example, the navigation system 100 includes an image sensor 101 (also referred to herein as an image acquisition device), one or more processors 103, and a memory 105. Further, the memory 105 may store an image database 107, a coarse model 109, and a fine model 111. In some alternative embodiments, the navigation system 100 may include additional sensors 113.

In certain embodiments, the navigation system 100 may be securely mounted to an object in a known positional relationship. Thus, the position and attitude of the object can be determined by determining the position and attitude of the navigation system 100. The object may be any object that is capable of movement or being moved. For example, the object may be a vehicle like an aircraft, a train, an automobile, a boat, a spacecraft, etc. When the object is a vehicle, the vehicle may be manned or unmanned. Further, the object may be a personal electronic device or other object. The navigation system 100 may provide information related to the pose of the object. For example, the navigation system 100 capably determines the pose of the object in up to six degrees of freedom with respect to a particular reference frame. When the reference frame is the Earth reference frame, the navigation system 100 may determine the latitude, longitude, and altitude of the object. Additionally, where applicable to an object, the navigation system 100 may determine the attitude of the object, like the yaw, pitch, and roll.

In further embodiments, the image sensor 101 may be a device that acquires image data from an environment surrounding the navigation system 100. For example, the image sensor 101 may be a camera, a depth camera, a LiDAR, or other image acquisition device. The image sensor 101 may acquire image data as query frames of image data. The image sensor 101 may be coupled to the one or more processors 103, where the image sensor 101 provides the acquired image data to the one or more processors 103.

In exemplary embodiments, the processor 103 receives acquired image data (query frames) from the image sensor 101 and executes instructions that cause the processor 103 to determine the pose of the object in up to six degrees of freedom. The processor 103 may be a computational device (such as a general-purpose processor, multi-core processor, multiple processors, dedicated circuitry, and the like). The functions performed by the processor 103 may be implemented using software, firmware, hardware, or any appropriate combination thereof. The processor 103 and other computational devices may be supplemented by, or incorporated in, specially designed application-specific integrated circuits (ASICs) or field programmable gate arrays (FPGAs). The processor 103 and other computational devices can also include or function with software programs, firmware, or other computer-readable instructions for performing various process tasks, calculations, and control functions used in the present methods and systems.

The present methods may be implemented by computer-executable instructions, such as program modules or components, which are executed by the processor 103 or other computational devices. Generally, program modules include routines, programs, objects, data components, data structures, algorithms, and the like, which perform particular tasks or implement particular abstract data types.

The memory may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

In certain embodiments, the processor 103 may be additionally coupled to the memory 105, where the memory 105 stores information that the processor 103 uses to determine pose information from the acquired image data from the image sensor 101. For example, in addition to computer-readable instructions, the memory 105 stores an image database 107. The image database 107 is a database of images received from a central repository of image data. The image database may include image data of the environment through which the navigation system 100 is traveling. For example, when the object is an aircraft, the image data may include overlapping, tiled satellite images of the surface of the earth over which the aircraft may travel. Additionally, the overlapping, tiled satellite images may be augmented by three-dimensional information. In further embodiments, for each image in the image database 107, the image database 107 may also include pre-calculated coarse and fine descriptors. For example, for the coarse descriptors, the image database 107 may store a general descriptor for each image. For the fine descriptor, the image database 107 may store pre-calculated local descriptors that describe features found in each image. In some implementations, the image data may be three-dimensional LiDAR data or other types of image data.

In further embodiments, the navigation system 100 acquires the information in the image database 107 from a central repository, such as an operations center, data center, or other location. The navigation system 100 may acquire the information in the image database 107 through a wireless or wired communication channel with the central repository. Alternatively, when the navigation system 100 is remotely located from the central repository, the image data can be sent to another computer near the navigation system 100 for installation onto the navigation system 100, either by using a computer-readable medium or through a wireless or wired communication channel.

In certain embodiments, during operation, the image sensor 101 acquires a frame of image data (referred to as the "query frame") and provides the query frame to the processor 103. Upon reception of the query frame, the processor 103 prepares the query frame for comparison to the image data in the image database 107. To prepare the query frame for comparison, the processor 103 may execute a coarse model 109 to determine a coarse descriptor for the query frame, and the processor 103 may execute a fine model 111 to determine fine descriptors for the query frame. The coarse model 109 and the fine model 111 may be machine learning models that calculate descriptors comparable to the coarse and fine descriptors of the image data stored in the image database 107. In some implementations, the coarse model 109 and fine model 111 may be the same models used when creating the pre-calculated coarse and fine descriptors stored in the image database 107. Alternatively, the coarse model 109 and the fine model 111 may be different models that produce comparable descriptors to the coarse and fine descriptors stored in the image database 107.

In some embodiments, the navigation system 100 acquires the coarse model 109 and the fine model 111 from the central repository that provided the image when the navigation system 100 acquired the image data. Alternatively, when the coarse model 109 and the fine model 111 are substantially static, the coarse model 109 and the fine model 111 may be loaded onto the memory 105 before the initial operation of the navigation system 100. When the coarse model 109 and the fine model 111 need to be updated or reinstalled in the memory 105, the navigation system 100 may acquire the coarse model 109 and the fine model 111 through a wireless or wired communication channel with the central repository. Alternatively, when the navigation system 100 is remotely located from the central repository, the coarse model 109 and the fine model 111 can be sent to another computer near the navigation system 100 for installation onto the navigation system 100, either by using a computer-readable medium or through a wireless or wired communication channel.

In certain embodiments, when the processor 103 determines the coarse descriptors for the query frame by executing the coarse model 109 using the query frame as an input, the processor 103 may compare the coarse descriptors against the coarse descriptors for the different images stored in the image database 107. The processor 103 then identifies a subset of images in the image database 107 that are the closest matching to the image database 107 based on the comparison of the coarse descriptors.

In an exemplary implementation, the image database 107 may include preprocessed satellite image tiles, such as United States Geographical Survey (USGS) satellite images. The preprocessed satellite images may be tiles encoded into a column vector image descriptor using global descriptor techniques. For example, in one technique for determining a global descriptor, a machine learning model receives a frame of image data as an input. One example of a machine learning model may be created using a residual neural network (ResNet), where a generalized mean-pooling (GeM) algorithm may be performed on the last layer of the ResNet, where the GeM is performed with the maximization of the average precision as an objective. The coarse model 109 may be similar to the model used to produce the coarse descriptors for the images in the image database 107. Other algorithms for generating global descriptors, such as a triplet loss approach or other algorithms, may also be used.

In some embodiments, the processor 103 may identify a subset of images by comparing the coarse descriptor of the query frame against the coarse descriptors for the images in the database. For example, the processor 103 may take the dot product of the global descriptor for the query frame with the global descriptor for each image or a subset of the images in the image database 107. Based on the result of the dot products, the processor 103 may identify a number of coarsely matching images in the image database 107 that best match the query frame. For example, the processor 103 may identify the twenty (or other number) best matching images based on the dot product of the coarse descriptors. In some embodiments, the number of coarsely matching images in the image database 107 identified as best matching may be adjustable. For example, a user may communicate with the processor 103 through a user interface (not shown) to control the number of images selected. Alternatively, the number of images selected from the image database 107 may be preconfigured or controlled by another external system. By identifying a set of coarsely matching images, non-matching images can be excluded from additional processing, increasing the processing speed because the set of coarsely matching images is processed in contrast to processing all (or a substantial number of) images in the image database 107.

In certain embodiments, when the processor 103 has selected the coarsely matching images, the processor 103 may execute a fine-matching algorithm to identify a candidate image from the coarsely matching images. To identify the candidate image, the processor 103 may provide the query frame to a fine model 111. The fine model 111 may be an algorithm that identifies features in an image that are suitable for comparison with features similarly identified in other images. As described herein, the description of the identified features for an image produced by the fine model 111 can be described as local descriptors for the image. As such, the fine model 111 may produce local descriptors for the query frame acquired by the image sensor 101. To facilitate comparisons between the images in the image database 107 with the local descriptors of the query frame, the image database 107 may also store local descriptors for the images stored in the image database 107. While the local descriptors for the images in the image database 107 may be calculated by the fine model 111, a model similar to the fine model 111 may be executed offline by another system to calculate the local descriptors for the images in the image database 107. The pre-calculated local descriptors may then be loaded into the image database 107, where the pre-calculated local descriptors are accessible to the processor 103 for comparison to acquired query frames.

In some embodiments, to calculate the local descriptors, the processor 103, executing the fine model 111, may perform a learning-based local descriptor identification algorithm. Additionally, to determine whether a coarsely matching image matches the query frame, the fine model 111, executed by the processor 103, may perform an attentional graphical neural network plus optimal matching layer. In the execution of the fine model 111, the processor 103 may perform the learning-based local descriptor algorithm on the query frame. The learning-based local descriptor algorithm is a deep learning-based algorithm that extracts local descriptors (key points and descriptors) from images. The extracted local descriptors are then compared against other similarly processed images. After acquiring the local descriptors, the fine model 111 may direct the processor 103 to perform a graphical neural network algorithm using the extracted local descriptors for the query frame and the stored local descriptors for each coarsely matching image. Additionally, the fine model 111 may be a graphical neural network with optimal matching layer. The processor 103 may perform the graphical neural network algorithm separately for each coarsely matching image. Further, the graphical neural network algorithm may additionally be performed for different orientations and sizes of the different coarsely matching images to account for different orientations of the object in relation to the environment and different distances from surfaces in the environment. The graphical neural network algorithm is also a deep learning-based algorithm that performs feature matching and geometric verification. The graphical neural network algorithm takes the local descriptors from the different images and uses graph neural networks to match the local descriptors. The graphical neural network algorithm produces confidence metrics for the putative matches. The processor 103 may sum up the produced confidence metrics to identify a candidate image from the coarsely matched images. As used herein, the term candidate image refers to the image in the image database 107 that is identified as the image most closely representing an environment captured in the query frame.

In certain embodiments, when the processor 103 has identified the candidate image, the processor 103 may perform a validity check to verify that the candidate image was not identified based on false data association. For example, the processor 103 may match the local descriptors for the query frame to the local descriptors for the candidate image. Based on the matching of the local descriptors, the processor 103 may estimate a homography matrix. Using the homography matrix, the processor 103 may map the bounds of the query frame and map the identified features in the query frame onto the candidate image. The processor 103 may then verify that the identified features in the query frame map to features on the candidate image that are within the mapped bounds of the query frame. If the query features map to features on the candidate image that are outside the mapped bounds on the candidate image or the mapped bounds represent an impossible potential mapped boundary on the candidate image (i.e., non-rectangular, garbled, etc.), the processor 103 may determine that the candidate image is a false match. Upon determining that the candidate image is a false match, the processor 103 selects the next best matching of the coarsely matched images based on the output of the fine model 111 as the candidate image, whereupon the processor 103 performs the validity check again. The processor 103 iteratively steps through the coarsely matched images until the processor 103 finds an image having the best match based on the output of the fine model 111 that also passes the validity check. If the processor 103 steps through all the coarsely matched images and has still not found an image that passes the validity check, the processor 103 may identify additional coarsely matched images.

In some embodiments, when performing the validity check, the processor 103 may perform a degenerate sample consensus (DEGENSAC) method or other method to ensure candidate image validity. For example, from the local descriptors of the query frame and the candidate image, the processor 103 may select a set of matching descriptors. The processor 103 may generate a homography matrix from the set of matching descriptors. Using the homography matrix generated from a set of matching descriptors, the processor 103 may use the local descriptors of the query frame to test the validity of the transformation hypothesis represented by the homography matrix. If the application of the homography matrix causes some of the local descriptors to fall outside of an expected region of the query frame mapped onto the candidate image, the processor 103 determines that the transformation hypothesis is not valid, and the candidate image is also not valid.

In further embodiments, when the processor 103 determines that the candidate image is valid, the processor 103 may designate the candidate image as a matching image. The processor 103 then calculates the pose of the object using a pose-solving algorithm. For example, in some implementations, the query frame may be a two-dimensional image, and the matching image may be three-dimensional. From the correspondence of the two-dimensional image to the three-dimensional image, the pose of the object associated with the two-dimensional image can be determined using a perspective-n-point (PnP) algorithm (such as EPnP, SQPnP, and P3P). In particular, the processor 103, when using a PnP algorithm, solves the following problem for matching features:

$$\begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} \tau_{11} & \tau_{12} & \tau_{13} & t_1 \\ \tau_{21} & \tau_{22} & \tau_{23} & t_2 \\ \tau_{31} & \tau_{32} & \tau_{33} & t_3 \end{bmatrix} \begin{bmatrix} X \\ Y \\ Z \\ 1 \end{bmatrix}$$

Where $\begin{bmatrix} u \\ v \\ 1 \end{bmatrix}$ is the observed pixel location, $\begin{bmatrix} f_x & 0 & c_x \\ 0 & f_y & c_y \\ 0 & 0 & 1 \end{bmatrix}$ are the known properties of the image sensor 101 that define the relation of the image sensor 101 to the object attached to the navigation system 100. Further, the $\begin{bmatrix} X \\ Y \\ Z \\ 1 \end{bmatrix}$ refer to the three-dimensional coordinates in the earth frame for the feature in the matching image associated with the observed pixel location. Using this data, the processor 103 can estimate $\begin{bmatrix} \tau_{11} & \tau_{12} & \tau_{13} & t_1 \\ \tau_{21} & \tau_{22} & \tau_{23} & t_2 \\ \tau_{31} & \tau_{32} & \tau_{33} & t_3 \end{bmatrix}$, which is the pose of the object attached to the navigation system 100 in six degrees of freedom. In particular, $\begin{matrix} \tau_{11} & \tau_{12} & \tau_{13} \\ \tau_{21} & \tau_{22} & \tau_{23} \\ \tau_{31} & \tau_{32} & \tau_{33} \end{matrix}$ represents the roll, pitch, and yaw of the object and $\begin{matrix} t_1 \\ t_2 \\ t_3 \end{matrix}$ represents the position of the object. Accordingly, the processor 103 may calculate the pose of the object in six degrees of freedom. When the processor 103 determines the pose of the object, the processor 103, another processor on the object, or a user can use the pose to direct the navigation of the attached object.

In some embodiments, the navigation system 100 may include additional sensors 113. The additional sensors 113 include sensors that provide information that the processor 103 can use to determine heading and altitude. For example, the additional sensors 113 may include inertial measurement units, GPS receivers, barometers, magnetometers, altimeters, etc. The additional sensors provide measurements of the motion of the object or environmental information that the processor 103 uses to calculate the heading and distance away from a surface (such as altitude above ground). Using the heading and distance enables the processor 103 to identify a candidate image more quickly.

In exemplary embodiments, knowledge of the heading and distance from a surface may reduce the number of comparisons needed between the query frame and the images in the image database 107. For example, when the object is an aircraft, and the image database contains images of terrain over which the aircraft may fly, the query frames may capture the terrain at different scales and orientations than the original device used to capture the images in the image database 107. Accordingly, when comparing the query frame to the images in the image database 107, each image may be incrementally scaled up or down and rotated to determine the scale and orientation of the query frame. When the heading and altitude are known from the information acquired from the additional sensors 113, the processor 103 may determine the scale and orientation of the query frame, such that the processor 103 may select the appropriate scale and orientation of potential matching images in the image database 107.

As described above, the execution of the coarse model 109, the fine model 111, the validity check, and the pose calculation are implemented by the processor 103 on the navigation system 100. However, in some implementations, the processor 103 may communicate with an external system, like a central server or other computational facility. In such an implementation, the processor 103 may transmit the query frame acquired by the image sensor 101 to the external system that determines the pose of the object using the methods described above. The external system may then transmit the calculated pose to the processor 103 for directing the navigation of the object.

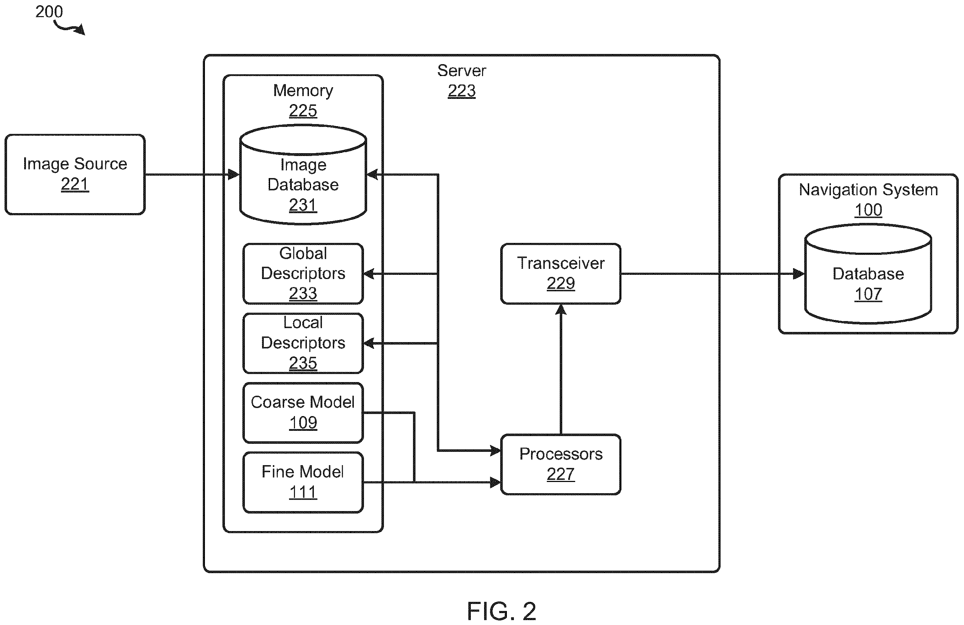

FIG. 2 is a block diagram of a system 200 for preparing an image database for use by a system, such as the navigation system 100, that performs pose relocalization from image data. As illustrated, the system 200 includes an image source 221 and a server 223. The server 223 acquires images from the image source 221 and prepares the image information for storage in the image database 107 on the navigation system 100. To prepare the images for storage in the image database 107, the server 223 may include a memory 225, one or more processors 227, and a transceiver 229.

In certain embodiments, the image source 221 may be any source of image data captured over a region. For example, the image data may be satellite imagery acquired from a third party, such as USGS NAIP or USGS HRO images. Alternatively, the image data may be lidar data acquired for a particular region. The server 223 processes the image data to create multi-scaling and overlapping tiles of image data. For example, the server 223 may receive USGS satellite image data covering approximately 12,000 square kilometers. The server 223 may process the images to create tiles with fifty percent overlap at five levels of scaling. The server 223 may save both the received images from the image source 221 and the processed image tiles within an image database 231 on the memory 225. The memory 225 may function similarly to the memory 105, described above, except that it stores more and different types of information. As the processing of the acquired images from the image source 221 may be a computationally intense task, the server 223 may be a supercomputer having a processor 227 with multiple cores or multiple processors 227. A processor 227 may function similarly to the processor 103, described above, except that it may include more processors and processes different types of data.

In further embodiments, after creating the different tiles of image data, the processor 227 may calculate vertical information such that the tiles of image data are three dimensional. For example, when the tiles of image data are geographical images, the processor 227 may identify vertical geographical information (terrain height) for the tiles of image data. For example, the processor may use terrain height information provided by the USGS space shuttle tomography (STRM) database or the USGS national 3D elevation program (3DEP) database to determine the terrain height of features in the tiles of image data. When the terrain height has been applied to the tiles of image data, the processor 227 may store the three-dimensional tiles in the image database 231.

In some embodiments, the processor 227 may also calculate descriptors for the tiles of image data stored in the image database 231. Pre-calculating the descriptors on the server 223 may relieve the computational load on the navigation system 100 and also increase the speed at which the navigation system 100 can determine a pose for an object. To pre-calculate the descriptors, the processor 227 may execute the coarse model 109 and the fine model 111 described above in connection with FIG. 1. In some implementations, the coarse model 109 and the fine model 111 stored in the memory 225 may not be identical to the coarse model 109 and the fine model 111 stored on the memory 105 of FIG. 1.

As described above, the execution of the coarse model 109 produces global descriptors for a tile of image data. The processor 227 may store the produced global descriptors in the memory 225 as global descriptors 233. Further, the execution of the fine model 111 produces local descriptors for a tile of image data. The processor 227 may store the produced local descriptors in the memory 225 as local descriptors 235.

When the descriptors are generated, and the image data is prepared, the processor 227 may transmit the image data described above in FIG. 1 to the navigation system 100 for storage in the image database 107 through the transceiver 229. For example, the processor 227 may send all or a subset of the tiles of three-dimensional image data to the navigation system 100. Also, the processor 227 may send the global descriptors 233 and the local descriptors 235 associated with the sent image data to the navigation system 100. In some implementations, the processor 227 may also send the coarse model 109 and the fine model 111 to the navigation system 100 for use when calculating descriptors for acquired query frames. Thus, the server 223 may provide information that enables the navigation system 100 to determine a pose in six degrees of freedom as described above in connection with FIG. 1.

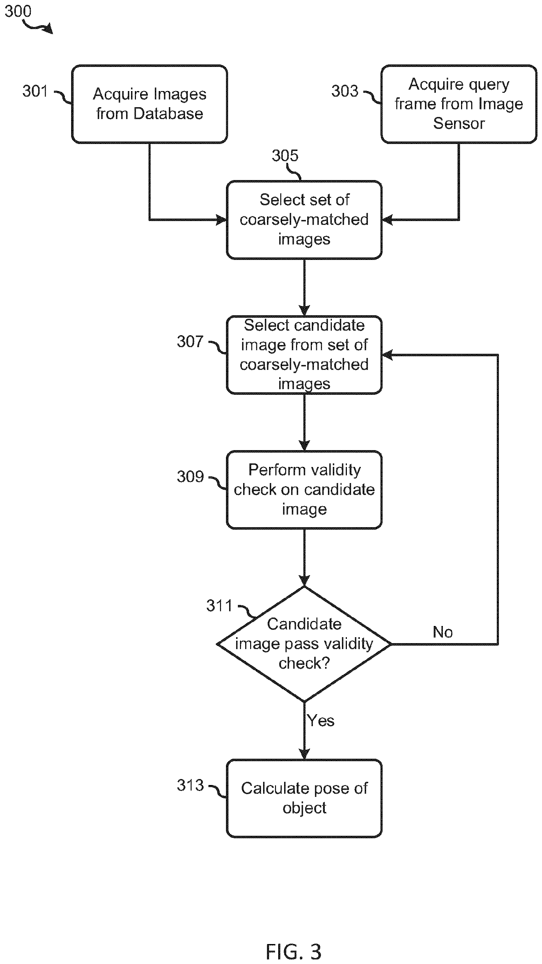

FIG. 3 is a flowchart diagram of a method 300 for calculating the pose of an object using acquired image data. The steps of method 300 are described herein with reference to the items described above in relation to FIG. 1. Method 300 proceeds at 301, where images are acquired from a database. For example, the processor 103 may acquire images from the image database 107, where an image in the image database 107 contains information that describes an area in three dimensions. Additionally, the processor 103 may acquire general and local descriptors for the images in the image database 107. Further, the method 300 proceeds at 303, where a query frame is acquired from an image sensor. For example, the processor 103 may acquire a query frame from the image sensor 101.

In certain embodiments, when the processor 103 has acquired the query frame and the images from the image database 107. The method 300 proceeds at 305, where a set of coarsely matched images is selected. For example, the processor 103 uses the coarse model 109 to generate general descriptors for the query frame, and the processor 103 compares the query frame general descriptors against the general descriptors for the images in the image database 107. Based on the comparison, the processor 103 identifies a set of coarsely matched images. When the processor 103 has identified the set of coarsely matched images, the method 300 proceeds at 307, where a candidate image is selected from the set of coarsely matched images. For example, the processor 103 uses the fine model 111 to generate local descriptors for the query frame and compares the local descriptors for the query frame against the local descriptors of the different images in the set of coarsely matched images. Based on the comparison, the processor 103 may select a candidate image.

In additional embodiments, when the candidate image has been selected, the method 300 proceeds to 309, where a validity check is performed on the candidate image. For example, the processor 103 may identify a transformation model (such as a homography matrix) that transforms some of the local descriptors of the query frame to corresponding local descriptors in the candidate image. Using the homography matrix, the processor 103 may identify the bounds of the superposition of the query frame on the candidate image. The processor 103 may perform the validity check by determining whether the homography matrix maps the local descriptors for the query frame onto locations on the candidate image that are within the bounds of the superposition. The method 300 then proceeds to 311, where the processor 103 determines whether the candidate image passed the validity check. If the candidate image fails the validity check, the method 300 returns to 307 for selecting a new candidate image from the set of coarsely matched images.

In certain embodiments, when the candidate image passes the validity check, the method proceeds to 313, where a pose of the object is calculated. For example, the candidate image is designated as a matching image, and using corresponding local descriptors for the matching image and the query frame along with parameters for the image sensor, the processor 103 may use a PnP algorithm to identify the pose of the object. Having identified the pose of the object, the calculated information can then be used for navigation and other activities that potentially benefit from the identified pose information.

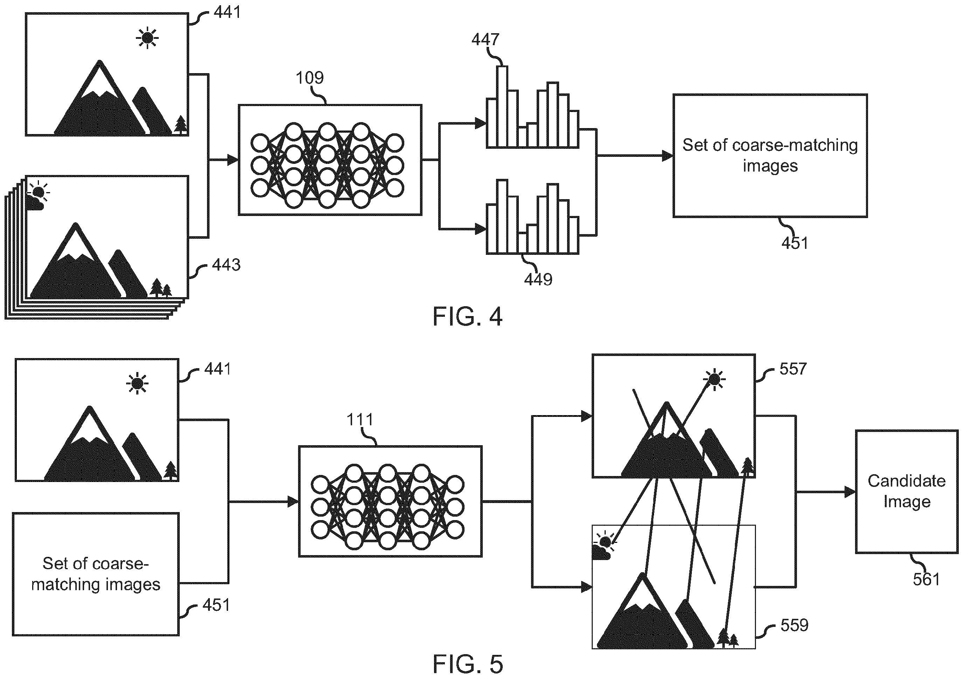

FIGs. 4 and 5 are diagrams respectively illustrating the coarse comparison and the fine comparison of a query frame with images in the image database. In particular, FIG. 4 is a diagram illustrating the identification of a set of coarse-matching images 451 using a coarse model 109. Additionally, FIG. 5 is a diagram illustrating the identification of a candidate image using a fine model 111.

With regards to FIG. 4, a system (such as the navigation system 100 described in FIG. 1) may acquire a query frame 441 and a set of database images 443 from an image database. The query frame 441 may be provided as an input for a coarse model 109. The coarse model 109 may provide query general descriptors 447 for the query frame 441. Additionally, the database images 443 may separately be provided as inputs to the coarse model 109 to generate database general descriptors 449 for each of the database images 443. The database images 443 may be provided as inputs to the coarse model 109 at the same time the coarse model 109 generates the query general descriptors 447. Alternatively, the database general descriptors 449 may be pre-computed by the system or by another system.

When a system acquires the query general descriptors 447 and the database general descriptors 449, the system may compare the query general descriptors 447 against the database general descriptors 449 to identify a set of coarse-matching images 451. For example, the system may perform a dot product of the query general descriptors 447 with the database general descriptors 449 and identify the database images 443 that have the highest results of the dot product. The system may designate a tunable number of the database images 443 having the highest result of the dot product as the set of coarse-matching images 451.

With regards to FIG. 5, the system may identify a candidate image from the set of coarse-matching images 451 that matches the query frame 441 based on local descriptors generated by a fine model 111. For example, a system may acquire the query frame 441 and provide the query frame 441 as an input to a fine model 111 that identifies query local descriptors 557. Additionally, the system may provide each image in the set of coarse-matching images 451 as an input to the fine model 111 to identify database local descriptors 559 for each of the images in the set of coarse-matching images 451. The images in the set of coarse-matching images 451 may be provided as inputs to the fine model 111 at the same time the fine model 111 generates the query local descriptors 557 to generate the database local descriptors 559. Alternatively, the database local descriptors 559 may be pre-computed by the system or by another system.

When a system acquires the query local descriptors 557 and the database local descriptors 559, the system may compare the query local descriptors 557 against the database local descriptors 559 to identify a candidate image 561. For example, the system may provide the query local descriptors 557 and the database local descriptors 559 as inputs to a model that provides confidence metrics for putative matches between an image in the set of coarse-matching images 451 and the query frame 441. The system may sum the produced confidence metrics to identify a candidate image 561 from the set of coarse-matching images 451, where the candidate image 561 has the highest confidence metric sum. The candidate image 561 may then be checked for validity, as discussed above.

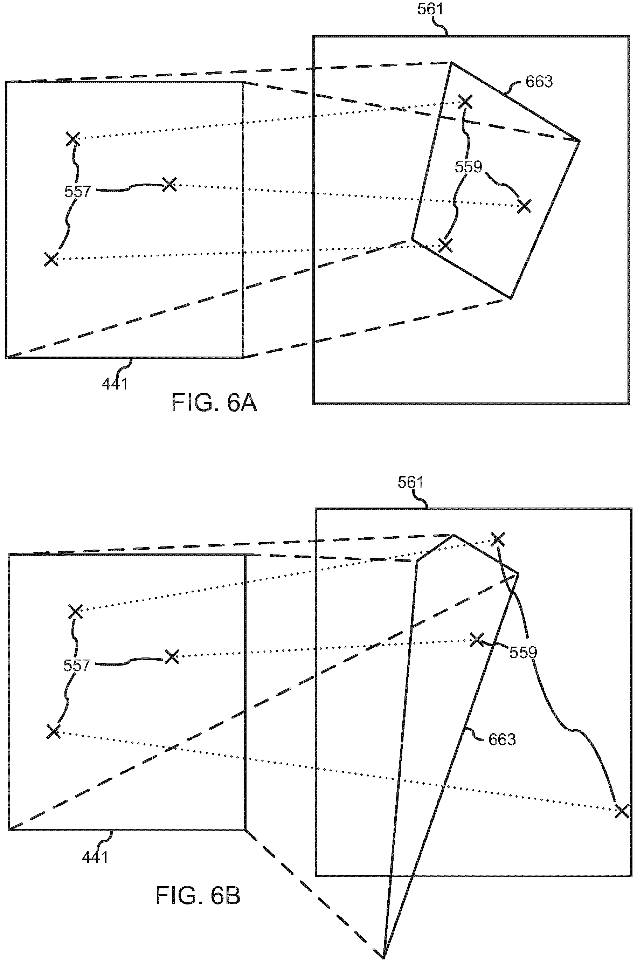

FIGs. 6A and 6B illustrate the application of a validity check to a candidate image. In particular, FIG. 6A illustrates the application of a homography matrix to a query frame that maps the query frame onto a valid candidate image, and FIG. 6B illustrates the application of a homography matrix to a query frame that maps the query frame onto an invalid candidate image.

As stated, FIG. 6A illustrates the application of a validity check to a candidate image 561. When performing the validity check, a system may identify a homography matrix based on at least some of the query local descriptors 557 and the database local descriptors 559. Using the identified homography matrix, the system may create a mapping 663 of the boundaries of the query frame 441 onto the candidate image 561. After creating the mapping 663, the system may use the homography matrix to map the query local descriptors 557 onto the candidate image 561. As shown in FIG. 6A, when the homography matrix is applied to the query local descriptors 557, the query local descriptors 557 map to database local descriptors 559 that are located within the mapping 663. As the mapped database local descriptors 559 are located within the mapping 663, the candidate image 561 in FIG. 6A passes the validity check and the candidate image 561 is designated as a matching image.

In contrast, in FIG. 6B, where a similar mapping 663 is created from a homography matrix, some of the query local descriptors 557 map to database local descriptors 559 that are located outside the mapping 663. As the query local descriptors 557 map to database local descriptors 559 that are outside the mapping 663, the candidate image 561 in FIG. 6B fails the validity check. In some implementations, the candidate image 561 may fail the validity check when any query local descriptors 557 map to database local descriptors 559 that are located outside of the mapping 663. However, the candidate image 561 may fail the validity check when a certain number or proportion of the query local descriptors 557 map to database local descriptors 559 that are located outside of the mapping 663.

Additionally, the mapping 663 created from the homography matrix may represent an impossible potential mapping 663 on the candidate image 561. For example, the mapping 663 may be an extreme non-rectangular shape or a garbled mapping. When the mapping 663 is an impossible mapping, the garbled mapping or irregular shape may indicate that the homography-matrix that resulted from the local descriptors are not a valid mapping. Thus, the candidate image 561 is a false match for the query frame 441.

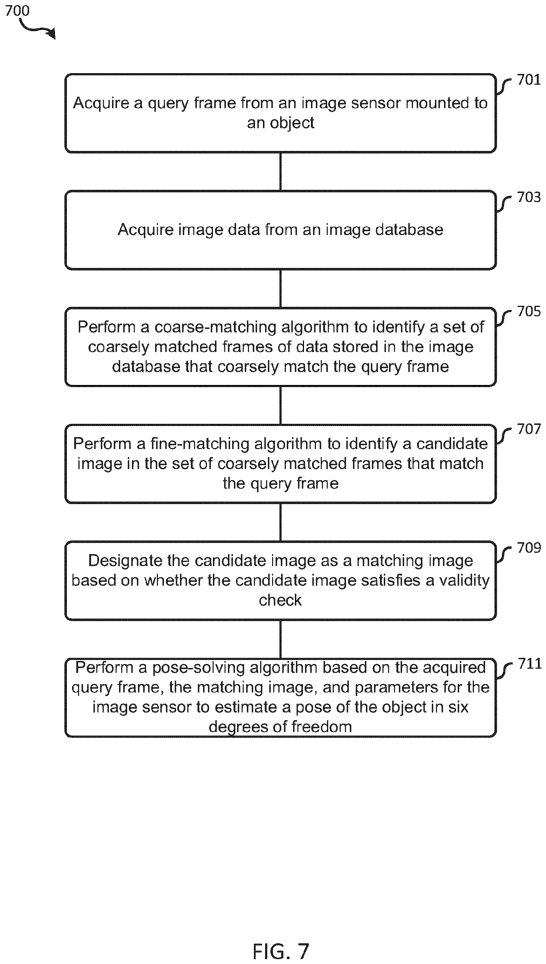

FIG. 7 is a flowchart diagram of a method 600 for performing vision-only pose relocalization. The method 700 proceeds at 701, where a query frame is acquired from an image sensor mounted to an object. The method 700 further proceeds at 703, where image data is acquired from an image database. Additionally, the method 700 proceeds at 705, where a coarse-matching algorithm is performed to identify a set of coarsely matched frames of data stored in the image database that coarsely match the query frame. Moreover, the method 707 proceeds at 707, where a fine-matching algorithm is performed to identify a candidate image in the set of coarsely matched frames that match the query frame. Also, the method proceeds at 709, where the candidate image is designated as a matching image based on whether the candidate image satisfies a validity check. Further, the method 700 proceeds at 711, where a pose-solving algorithm is performed based on the acquired query frame, the matching image, and parameters for the image sensor to estimate a pose of the object in six degrees of freedom.

*Example Embodiments*

Example 1 includes a system comprising: an image acquisition device mounted to an object, the image acquisition device configured to acquire a query frame of an environment containing the object; a memory device configured to store an image database; and at least one processor configured to execute computer-readable instructions that direct the at least one processor to: perform a coarse-matching algorithm to identify a set of coarsely matched frames of data stored in the image database that coarsely match the query frame; perform a fine-matching algorithm to identify a candidate image in the set of coarsely matched frames that match the query frame; designate the candidate image as a matching image based on whether the candidate image satisfies a validity check; and perform a pose-solving algorithm based on the acquired query frame, the matching image, and parameters for the image acquisition device to estimate a pose of the object in six degrees of freedom.

Example 2 includes the system of Example 1, wherein the computer-readable instructions that direct the at least one processor to perform the coarse-matching algorithm further direct the at least one processor to: calculate a query general descriptor for the query frame; acquire database general descriptors for a plurality of frames stored in the image database; compare the database general descriptors to the query general descriptor for each of the plurality of frames; and designate a number of frames in the plurality of frames as the set of coarsely matched frames.

Example 3 includes the system of Example 2, wherein the query general descriptor for the query frame is calculated using a machine learning model stored on the memory device.

Example 4 includes the system of Example 3, wherein the query general descriptor is calculated using generalized mean pooling.

Example 5 includes the system of any of Examples 2-4, wherein the database general descriptors are stored on the memory device after being received from a central repository, wherein the database general descriptors were calculated by a plurality of processors at the central repository.

Example 6 includes the system of any of Examples 1-5, wherein the computer-readable instructions that direct the at least one processor to perform the fine-matching algorithm further direct the at least one processor to: calculate query local descriptors for the query frame; acquire database local descriptors for a plurality of frames stored in the image database; compare the database local descriptors to the query local descriptors for each of the frames in the set of coarsely matched frames; and identify the candidate image in the set of coarsely matched frames.

Example 7 includes the system of Example 6, wherein the query local descriptors for the query frame are calculated using a machine learning model stored on the memory device.

Example 8 includes the system of any of Examples 6-7, wherein the query local descriptors are calculated using a learning based local descriptor algorithm.

Example 9 includes the system of any of Examples 6-8, wherein the database local descriptors are stored on the memory device after being received from a central repository, wherein the database local descriptors were calculated by a plurality of processors at the central repository.

Example 10 includes the system of any of Examples 6-9, wherein the database local descriptors are compared to the query local descriptors using a attentional graphical neural network algorithm.

Example 11 includes the system of any of Examples 1-10, wherein the computer-readable instructions that direct the at least one processor to designate the candidate image as a matching image further direct the at least one processor to: calculate a homography matrix based on correspondences between query local descriptors for the query frame and database local descriptors for the candidate image; map boundaries for the query frame onto the candidate image; and determine that the candidate image is the matching image when at least one of the query local descriptors correspond to the database local descriptors within the mapped boundaries and the mapped boundaries are associated with a valid mapping on the candidate image.

Example 12 includes the system of any of Examples 1-11, wherein the pose-solving algorithm is a perspective-N-point algorithm.

Example 13 includes the system of any of Examples 1-12, further comprising one or more additional sensors, wherein the one or more additional sensors provide navigation measurements of heading and altitude, wherein the at least one processor performs the coarse-matching algorithm for the data in the image database at an orientation associated with the heading and a scale associated with the altitude.

Example 14 includes a method comprising: acquiring a query frame from an image sensor mounted to an object; acquiring image data from an image database; performing a coarse-matching algorithm to identify a set of coarsely matched frames of data stored in the image database that coarsely match the query frame; performing a fine-matching algorithm to identify a candidate image in the set of coarsely matched frames that match the query frame; designating the candidate image as a matching image based on whether the candidate image satisfies a validity check; and performing a pose-solving algorithm based on the acquired query frame, the matching image, and parameters for the image sensor to estimate a pose of the object in six degrees of freedom.

Example 15 includes the method of Example 14, wherein performing the coarse-matching algorithm further comprises: calculating a query general descriptor for the query frame; acquiring database general descriptors for a plurality of frames stored in the image database; comparing the database general descriptors to the query general descriptor for each of the plurality of frames; and designating a number of frames in the plurality of frames as the set of coarsely matched frames.

Example 16 includes the method of Example 15, wherein performing the coarse-matching algorithm comprises calculating the query general descriptor for the query frame using a machine learning model.

Example 17 includes the method of any of Examples 14-16, wherein performing the fine-matching algorithm further comprises: calculating query local descriptors for the query frame; acquiring database local descriptors for a plurality of frames stored in the image database; comparing the database local descriptors to the query local descriptor for each of the frames in the set of coarsely matched frames; and identifying the candidate image in the set of coarsely matched frames.

Example 18 includes the method of Example 17, wherein the query local descriptors for the query frame are calculated using a machine learning model.

Example 19 includes the method of any of Examples 14-18, wherein designating the matching candidate further comprises: calculating a homography matrix based on correspondences between query local descriptors for the query frame and database local descriptors for the candidate image; mapping boundaries for the query frame onto the candidate image; and determining that the candidate image is the matching image when the query local descriptors correspond to the database local descriptors within the mapped boundaries and the mapped boundaries are associated with a valid mapping on the candidate image.

Example 20 includes a system comprising: a central repository comprising: a plurality of processors; and an image database storing a repository of image data acquired from a third party; wherein the plurality of processors executes a plurality of machine learning models using a portion of the repository of image data to create a plurality of three-dimensional images, local descriptors, and general descriptors for images in the plurality of three-dimensional images; and a navigation system comprising: an image sensor mounted to an object, the image sensor configured to acquire a query frame of an environment containing the navigation system; a memory device configured to store the three-dimensional images, the local descriptors, and the general descriptors received from the central repository; and at least one processor configured to execute computer-readable instructions that direct the at least one processor to: perform a coarse-matching algorithm to identify a set of coarsely matched frames of data in the three-dimensional images that coarsely match the query frame; perform a fine-matching algorithm to identify a candidate image in the set of coarsely matched candidates that match the query frame; designate the candidate image as a matching image based on whether the candidate image satisfies a validity check; and perform a pose-solving algorithm based on the acquired query frame, the matching image, and parameters for the image sensor to estimate a pose of the object in six degrees of freedom.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. A system comprising:

    an image acquisition device mounted to an object, the image acquisition device configured to acquire a query frame of an environment containing the object;
    a memory device configured to store an image database; and
    at least one processor configured to execute computer-readable instructions that direct the at least one processor to:

        perform a coarse-matching algorithm to identify a set of coarsely matched frames of data stored in the image database that coarsely match the query frame;
        perform a fine-matching algorithm to identify a candidate image in the set of coarsely matched frames that match the query frame;
        designate the candidate image as a matching image based on whether the candidate image satisfies a validity check; and
        perform a pose-solving algorithm based on the acquired query frame, the matching image, and parameters for the image acquisition device to estimate a pose of the object in six degrees of freedom.

2. The system of claim 1, wherein the computer-readable instructions that direct the at least one processor to perform the coarse-matching algorithm further direct the at least one processor to:

    calculate a query general descriptor for the query frame, wherein the query general descriptor for the query frame is calculated using a machine learning model stored on the memory device;
    acquire database general descriptors for a plurality of frames stored in the image database;
    compare the database general descriptors to the query general descriptor for each of the plurality of frames; and
    designate a number of frames in the plurality of frames as the set of coarsely matched frames.

3. The system of claim 2, wherein the database general descriptors are stored on the memory device after being received from a central repository, wherein the database general descriptors were calculated by a plurality of processors at the central repository.

4. The system of claim 1, wherein the computer-readable instructions that direct the at least one processor to perform the fine-matching algorithm further direct the at least one processor to:

    calculate query local descriptors for the query frame, wherein the query local descriptors for the query frame are calculated using a machine learning model stored on the memory device;
    acquire database local descriptors for a plurality of frames stored in the image database, wherein the database local descriptors are stored on the memory device after being received from a central repository, wherein the database local descriptors were calculated by a plurality of processors at the central repository;
    compare the database local descriptors to the query local descriptors for each of the frames in the set of coarsely matched frames using an attentional graphical neural network algorithm; and
    identify the candidate image in the set of coarsely matched frames.

5. The system of claim 1, wherein the computer-readable instructions that direct the at least one processor to designate the candidate image as a matching image further direct the at least one processor to:

> calculate a homography matrix based on correspondences between query local descriptors for the query frame and database local descriptors for the candidate image;
> map boundaries for the query frame onto the candidate image; and
> determine that the candidate image is the matching image when at least one of the query local descriptors correspond to the database local descriptors within the mapped boundaries and the mapped boundaries are associated with a valid mapping on the candidate image.

6. The system of claim 1, further comprising one or more additional sensors, wherein the one or more additional sensors provide navigation measurements of heading and altitude, wherein the at least one processor performs the coarse-matching algorithm for the data in the image database at an orientation associated with the heading and a scale associated with the altitude.

7. A method comprising:

> acquiring a query frame from an image sensor mounted to an object;
> acquiring image data from an image database;
> performing a coarse-matching algorithm to identify a set of coarsely matched frames of data stored in the image database that coarsely match the query frame;
> performing a fine-matching algorithm to identify a candidate image in the set of coarsely matched frames that match the query frame;
> designating the candidate image as a matching image based on whether the candidate image satisfies a validity check; and
> performing a pose-solving algorithm based on the acquired query frame, the matching image, and parameters for the image sensor to estimate a pose of the object in six degrees of freedom.

8. The method of claim 7, wherein performing the coarse-matching algorithm further comprises:

> calculating a query general descriptor for the query frame using a machine learning model;
> acquiring database general descriptors for a plurality of frames stored in the image database;
> comparing the database general descriptors to the query general descriptor for each of the plurality of frames; and
> designating a number of frames in the plurality of frames as the set of coarsely matched frames.

9. The method of claim 7, wherein performing the fine-matching algorithm further comprises:

> calculating query local descriptors for the query frame using a machine learning model;
> acquiring database local descriptors for a plurality of frames stored in the image database;
> comparing the database local descriptors to the query local descriptor for each of the frames in the set of coarsely matched frames; and
> identifying the candidate image in the set of coarsely matched frames.

10. The method of claim 7, wherein designating the matching candidate further comprises:

> calculating a homography matrix based on correspondences between query local descriptors for the query frame and database local descriptors for the candidate image;
> mapping boundaries for the query frame onto the candidate image; and
> determining that the candidate image is the matching image when the query local descriptors correspond to the database local descriptors within the mapped boundaries and the mapped boundaries are associated with a valid mapping on the candidate image.

FIG. 1

FIG. 2

300

301 — Acquire Images from Database

303 — Acquire query frame from Image Sensor

305 — Select set of coarsely-matched images

307 — Select candidate image from set of coarsely-matched images

309 — Perform validity check on candidate image

311 — Candidate image pass validity check?

No

Yes

313 — Calculate pose of object

FIG. 3

FIG. 4

FIG. 5

FIG. 6A

FIG. 6B

700

701

Acquire a query frame from an image sensor mounted to an object

703

Acquire image data from an image database

705

Perform a coarse-matching algorithm to identify a set of coarsely matched frames of data stored in the image database that coarsely match the query frame

707

Perform a fine-matching algorithm to identify a candidate image in the set of coarsely matched frames that match the query frame

709

Designate the candidate image as a matching image based on whether the candidate image satisfies a validity check

711

Perform a pose-solving algorithm based on the acquired query frame, the matching image, and parameters for the image sensor to estimate a pose of the object in six degrees of freedom

FIG. 7

Europäisches
Patentamt

European
Patent Office

Office européen
des brevets

## EUROPEAN SEARCH REPORT

Application Number

EP 24 17 8802

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/134057 A1 (INTEL CORP [US]; SHI XUESONG [CN] ET AL.) 30 June 2022 (2022-06-30) | 1-5,7-10 | INV. G06V10/75 G06T7/73 |
| Y | * paragraph [0019] * * paragraph [0030] - paragraph [0037] * * paragraph [0043] * * paragraph [0047] * * paragraph [0049] * ----- | 6 | G06V10/82 G06V20/13 G06V20/56 |
| Y | Yan Shen ET AL: "Long-Term Visual Localization with Mobile Sensors", , 16 April 2023 (2023-04-16), pages 1-11, XP093201660, Retrieved from the Internet: URL:https://arxiv.org/pdf/2304.07691 * the whole document * ----- | 6 | |

TECHNICAL FIELDS
SEARCHED     (IPC)

G06V
G06T

The present search report has been drawn up for all claims

| Place of search | Date of completion of the search | Examiner |
|---|---|---|
| The Hague | 15 October 2024 | Martinez, Francis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

2

## ANNEX TO THE EUROPEAN SEARCH REPORT
## ON EUROPEAN PATENT APPLICATION NO.

EP 24 17 8802

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | Publication date | Patent family member(s) | | Publication date |
|---|---|---|---|---|
| WO 2022134057 A1 | 30-06-2022 | TW | 202226001 A | 01-07-2022 |
| | | US | 2024029300 A1 | 25-01-2024 |
| | | WO | 2022134057 A1 | 30-06-2022 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 47180723

- IN 202311042129